# EUROPEAN PATENT SPECIFICATION

(11) **EP 4 564 117 B1**
(45) Date of publication and mention of the grant of the patent: **16.09.2026**
(21) Application number: 24215545.5
(22) Date of filing: 26.11.2024
(51) Int. Cl.: G05D 1/229, G05D 1/648, E01C 19/48, E01C 19/00, G05D 105/05, G05D 107/90, G05D 109/10

(54) **INFORMATION PROCESSING APPARATUS, ROAD SURFACE PAVING SYSTEM, ROAD PAVING MACHINE, AND PROGRAM**
INFORMATIONSVERARBEITUNGSVORRICHTUNG, STRASSENBELAGSYSTEM, STRASSENBELAGMASCHINE UND PROGRAMM
APPAREIL DE TRAITEMENT D'INFORMATIONS, SYSTÈME DE PAVAGE DE SURFACE DE ROUTE, MACHINE DE PAVAGE DE ROUTE ET PROGRAMME

(30) Priority: 28.11.2023 JP 2023200847
(43) Date of publication of application: 04.06.2025
(73) Proprietor: Sumitomo Construction Machinery Co., Ltd., Tokyo 141-6025 (JP)
(72) Inventor: TERAMOTO, Tota, Chiba, 263-0001 (JP); ITOH, Takumi, Chiba, 263-0001 (JP)
(74) Representative: Louis Pöhlau Lohrentz

(56) References cited:
- EP-A1- 3 276 079
- EP-A1- 3 951 060
- EP-A1- 4 256 920
- EP-A1- 4 257 748

## Description

### TECHNICAL FIELD

The present disclosure relates to an information processing apparatus, a road surface paving system, a road paving machine, and a program.

### BACKGROUND ART

Conventionally, asphalt finishers are known that include a tractor; a hopper that is installed on the front side of the tractor and that receives a pavement material; a conveyor that conveys the pavement material in the hopper to the rear side of the tractor; a screw that spreads out the pavement material conveyed by the conveyor and spread onto the road surface in the vehicle width direction on the rear side of the tractor; and a screed that spreads evenly the pavement material spread out by the screw on the rear side of the screw.

For example, Patent Document 1 discloses an asphalt finisher provided with a control device for generating a target line based on changes in features within a predetermined area of the ground to be constructed and steering the tractor based on the target line.

Patent Document 2 discloses a work vehicle capable of identifying an obstacle.

Patent Document 3 discloses a control system of a road machine.

### RELATED ART DOCUMENT

### PATENT DOCUMENT

Patent Document 1: Japanese Unexamined Patent Publication No. 2023-154940
Patent Document 2: EP4256920A1
Patent Document 3: EP4257748A1

### SUMMARY OF THE INVENTION

### PROBLEMS TO BE SOLVED BY THE INVENTION

However, depending on the shape of the road surface to be constructed, there may be an area that is difficult to be constructed by a road paving machine.

It is an object of the present invention to accurately specify a road surface to be constructed by a road paving machine.

### MEANS FOR SOLVING THE PROBLEMS

The invention is set out in the appended set of claims. According to an aspect of the present disclosure, an information processing apparatus is provided. The information processing apparatus includes: a specifying part configured to specify an area to be excluded from a road surface to be constructed by a road paving machine according to a change in a shape of an edge of the road surface to be constructed by the road paving machine, based on information on an operating speed of the road paving machine; and a correction part configured to correct an area of the road surface to be constructed, based on the area to be excluded specified by the specifying part.

### EFFECTS OF THE INVENTION

According to an aspect of the present disclosure, a road surface to be constructed by a road paving machine can be accurately specified.

### BRIEF DESCRIPTION OF THE DRAWINGS

FIG. 1 is a schematic diagram illustrating an example of an overall configuration of a road surface paving system according to a first embodiment.
FIG. 2 is a side view illustrating an example of an asphalt finisher according to the first embodiment.
FIG. 3 is a top view illustrating an example of an asphalt finisher according to the first embodiment.
FIG. 4 is a rear view illustrating an example of an asphalt finisher according to the first embodiment.
FIG. 5 is a block diagram illustrating an example of a hardware configuration of a remote management device according to the first embodiment.
FIG. 6 is a block diagram illustrating an example of a functional configuration of a road surface paving system according to the first embodiment.
FIG. 7 is a diagram illustrating an example of design data before correction according to the first embodiment.
FIG. 8 is a diagram illustrating an example of design data after correction according to the first embodiment.
FIG. 9 is a sequence diagram illustrating an example of correction processing according to the first embodiment.
FIG. 10 is a block diagram illustrating an example of a functional configuration of an asphalt finisher according to a second embodiment.
FIG. 11 is a block diagram illustrating an example of a functional configuration of a road surface paving system according to a third embodiment.
FIG. 12 is a flowchart illustrating an example of recorrection processing according to the third embodiment.

### EMBODIMENT OF THE INVENTION

Hereinafter, embodiments of the present disclosure will be described with reference to the drawings. The embodiments described below do not limit the invention, but are illustrative examples, and not all features or combinations thereof described in the embodiments are necessarily essential to the invention. In each drawing, the same or corresponding configurations may be indicated by the same or corresponding reference numerals, and explanations thereof may be omitted.

### [First Embodiment]

The first embodiment of the present invention is a road surface paving system for paving a road surface using an asphalt finisher. The asphalt finisher according to the present embodiment has an automatic pavement function of automatically paving a road surface while performing automatic steering of a tractor and automatic extension and retraction of a screed.

In the automatic pavement function of the asphalt finisher, design data that indicates the area of the road surface to be constructed is used. The design data includes linear data and cross-sectional shape data that indicate the shape of the road. The controller of the asphalt finisher extracts the travel route and the shape of the edge of the road surface from the design data. Then, the controller of the asphalt finisher realizes the automatic pavement function by controlling the steering of the tractor and the extension and retraction of the screed and the like, while correcting the error between the extracted information and the detection result of the vehicle condition and the vehicle position.

However, in the general shape of the edge of the road, there are areas where it is difficult to construct with the asphalt finisher. For example, when there is a part that protrudes toward the road, such as a stormwater inlet installed on the shoulder of the road, there may be an area in front of and behind the part in the traveling direction of the vehicle that is difficult to construct with the asphalt finisher. Such an area that is difficult to construct may not be reflected in the design data. Therefore, there is a need for a function to correct the design data to the shape that can be constructed with the asphalt finisher.

### <Overall Configuration of Road Surface Paving System>

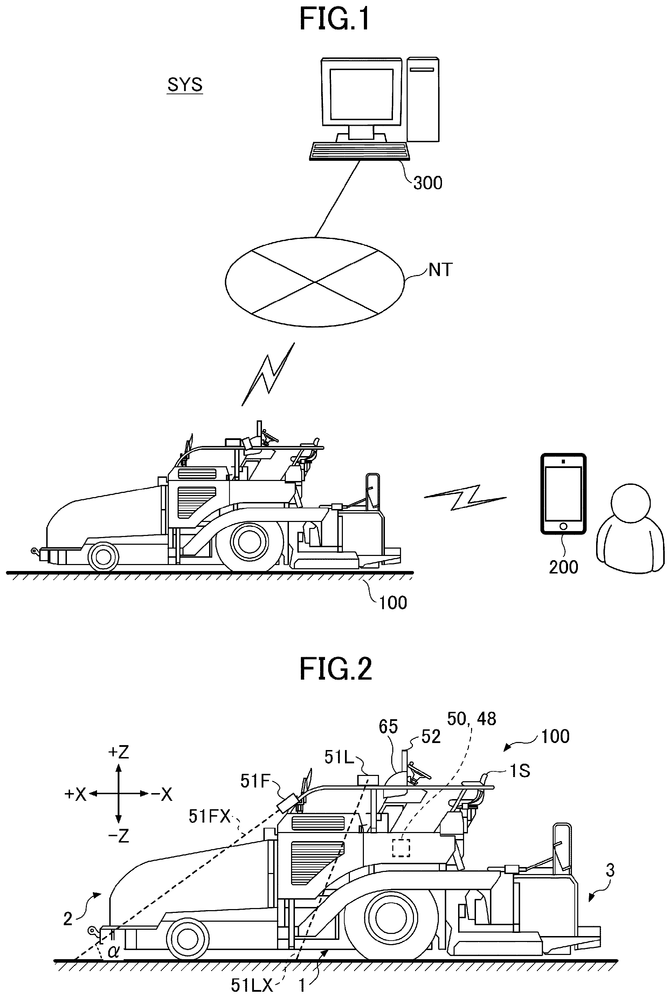

An overall configuration of a road surface paving system SYS according to the first embodiment will be described with reference to FIG. 1. FIG. 1 is a schematic diagram illustrating an example of the overall configuration of a road surface paving system according to the first embodiment.

As illustrated in FIG. 1, the road surface paving system SYS according to the first embodiment includes an asphalt finisher 100, a communication terminal 200, and a remote management device 300. The asphalt finisher 100 and the remote management device 300 are connected by a public network NT.

The road surface paving system SYS may, for example, set various settings related to the control of the asphalt finisher 100 at the communication terminal 200 in response to an input from a user or automatically, and transmit the settings to the asphalt finisher 100. Thus, various operations of the asphalt finisher 100 can be controlled and monitored from the communication terminal 200.

The asphalt finisher 100 may also transmit information indicating the current situation to one or more of the communication terminal 200 and the remote management device 300. Further, the asphalt finisher 100 may transmit log information indicating the pavement result of the road surface to one or more of the communication terminal 200 and the remote management device 300.

The remote management device 300 is a terminal provided for remote management of a work site. For example, the remote management device 300 manages the construction situation by storing log information transmitted from the asphalt finisher 100.

The communication terminal 200 is, for example, a terminal owned by a user managing work at a work site or a user performing work at a work site. In the present embodiment, the communication terminal 200 is a portable information terminal such as a smartphone or a tablet terminal. The communication terminal 200 receives image information representing the current construction state of the asphalt finisher 100 from the asphalt finisher 100 and displays it on a display device (for example, on a liquid crystal panel). Thus, a user managing work at a work site can recognize the current construction state of the asphalt finisher 100.

The road surface paving system SYS may include one or more communication terminals 200. Thus, the road surface paving system SYS can provide information on the asphalt finisher 100 to a plurality of users using the respective communication terminals 200.

The road surface paving system SYS may include one or more asphalt finishers 100. Thus, the road surface paving system SYS can collect data on the asphalt finisher(s) 100, provide information to the user(s) based on the collected data, set the control of the asphalt finisher(s) 100, and the like.

### <Outline of Asphalt Finisher>

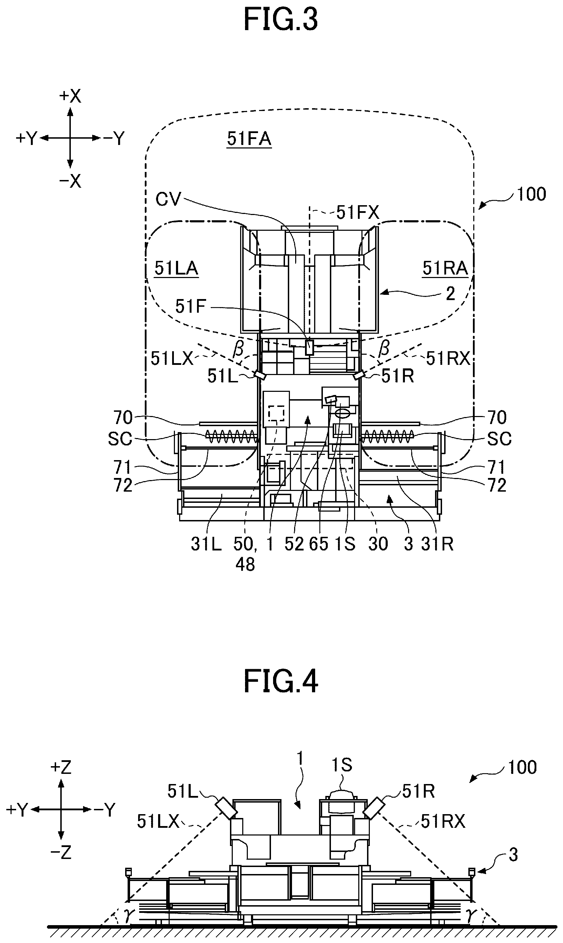

An outline of the asphalt finisher 100 as an example of a road paving machine according to the first embodiment will be described with reference to FIGS. 2 to 4. FIG. 2 is a side view illustrating an example of the asphalt finisher according to the first embodiment. FIG. 3 is a top view illustrating an example of the asphalt finisher according to the first embodiment. FIG. 4 is a rear view illustrating an example of the asphalt finisher according to the first embodiment.

The asphalt finisher 100 is mainly composed of a tractor 1, a hopper 2, and a screed 3.

The tractor 1 is a device for driving the asphalt finisher 100 and pulls the screed 3. In the present embodiment, the tractor 1 rotates two or four wheels using a traveling hydraulic motor to move the asphalt finisher 100. The traveling hydraulic motor rotates by receiving hydraulic oil from a hydraulic pump driven by a prime mover such as a diesel engine. In the upper part of the tractor 1, a driver's seat 1S and an operation panel 65 are arranged.

An imaging device 51 is mounted on the tractor 1. The imaging device 51 includes a right camera 51R mounted on the right side, a left camera 51L mounted on the left side, and a front camera 51F mounted on the front. A display device 52 is installed at a position that is easily visible to the driver seated in the driver's seat 1S. In the present embodiment, the direction of the hopper 2 viewed from the tractor 1 is forward (+X direction), and the direction of the screed 3 viewed from the tractor 1 is backward (-X direction). The +Y direction corresponds to the left direction, and the -Y direction corresponds to the right direction.

The hopper 2 is a mechanism for receiving a pavement material (for example, an asphalt mixture). The working device is a device for supplying the pavement material in front of the screed 3. In the present embodiment, the hopper 2 is configured to be opened and closed in the vehicle width direction by a hydraulic cylinder. The asphalt finisher 100 normally receives the pavement material from a loading platform of a dump truck with the hopper 2 fully opened. When the amount of pavement material in the hopper 2 decreases, the hopper 2 is closed, and the pavement material near the inner wall of the hopper 2 is collected in the central part of the hopper 2 so that a conveyor CV can convey the pavement material to the screed 3.

The conveyor CV is driven by a hydraulic motor rotated by receiving hydraulic oil from a hydraulic pump. In the present embodiment, the conveyor CV is configured to send the pavement material in the hopper 2 to the rear side of the tractor 1 through a conveyance passage. The conveyance passage is a substantially rectangular space formed inside the tractor 1, and has a substantially rectangular inlet opening into the hopper 2 at the front surface of the tractor 1.

A screw SC is driven by a hydraulic motor rotated by receiving hydraulic oil from a hydraulic pump. In the present embodiment, the screw SC includes a center screw (not illustrated), a left screw, and a right screw. The center screw is installed within the width of the tractor 1. The left screw is connected to the left end of the center screw and installed to project to the left with respect to the width of the tractor 1. The right screw is connected to the right end of the center screw and installed to project to the right with respect to the width of the tractor 1.

The screed 3 is a mechanism for spreading the pavement material evenly. In the present embodiment, the screed 3 is configured so as to be vertically movable and extendable and retractable in the vehicle width direction by a hydraulic cylinder. The width of the screed 3 is larger than the width of the tractor 1 when extended in the vehicle width direction. In the present embodiment, the screed 3 includes a main screed 30, a left extendable screed 31L, and a right extendable screed 31R. The left extendable screed 31L and the right extendable screed 31R are configured so as to be extendable and retractable in the vehicle width direction (Y-axis direction). The left extendable screed 31L and the right extendable screed 31R that are extendable and retractable in the vehicle width direction are arranged offset from each other in the traveling direction (X-axis direction). Therefore, they can have a width (length in the vehicle width direction) longer than when they are not offset, and can extend further in the vehicle width direction. Accordingly, wider new pavements can be constructed.

A controller 50 is a controller for controlling the asphalt finisher 100. The controller 50 is, for example, a computer having a central processing unit (CPU), a volatile memory, a nonvolatile memory, and the like. The controller 50 is a computer including a CPU and a random access memory (RAM), and is mounted on the tractor 1. Various functions of the controller 50 are implemented, for example, by the CPU executing a program stored in an auxiliary storage 48.

The auxiliary storage 48 is a device for storing various information. In the present embodiment, the auxiliary storage 48 is a nonvolatile memory and is integrated with the controller 50. However, the auxiliary storage 48 may be placed outside the controller 50 as a structure separate from the controller 50.

The imaging device 51 is mounted on the tractor 1. The imaging device 51 is configured to acquire information about the space around the asphalt finisher 100 and output the acquired information to the controller 50. In the present embodiment, the imaging device 51 includes the front camera 51F, the left camera 51L, and the right camera 51R. The imaging device 51 may be mounted on positions other than the right side, the left side, and the front of the tractor 1 (for example, on the rear). The imaging device 51 may be mounted with a wide-angle lens or a fisheye lens. The imaging device 51 may be mounted on the hopper 2 or on the screed 3.

The imaging device 51 according to the present embodiment is a camera equipped with an imaging element such as a charge coupled device (CCD) or a complementary metal-oxide-semiconductor (CMOS), for example. The imaging device 51 may be any space recognition device capable of recognizing a space based on the asphalt finisher 100, and may use, for example, light detection and ranging (LiDAR).

As illustrated in FIGS. 2 and 3, the front camera 51F is mounted on the front upper end of the tractor 1, and is mounted such that its optical axis 51FX extends forward in the traveling direction and forms an angle α with the road surface in a side view. As illustrated in FIGS. 2 to 4, the left camera 51L is mounted on the left side upper end of the tractor 1, and is mounted such that its optical axis 51LX forms an angle β with the left side surface of the tractor 1 in a top view and an angle γ with the road surface in a rear view. The right camera 51R is mounted in the same manner as the left camera 51L, with its left and right sides reversed.

A region 51FA surrounded by a broken line in FIG. 3 indicates the imaging range of the front camera 51F, a region 51LA surrounded by a dash-dotted line indicates the imaging range of the left camera 51L, and a region 51RA surrounded by a dash-dotted line indicates the imaging range of the right camera 51R.

The imaging device 51 is mounted on the asphalt finisher 100 via, for example, a bracket, a stay, a bar, or the like. In the present embodiment, the imaging device 51 is mounted on the tractor 1 via a mounting stay. However, the imaging device 51 may be directly mounted on the tractor 1 without a mounting stay, or may be embedded in the tractor 1.

In the present embodiment, the imaging device 51 outputs the acquired input image to the controller 50. When an input image is acquired by using the fisheye lens or the wide-angle lens, the imaging device 51 may output to the controller 50 a corrected input image in which the apparent distortion and perspective caused by using those lenses have been corrected. Alternatively, an input image in which the apparent distortion and perspective are not corrected may be output to the controller 50 as it is. In this case, the apparent distortion and perspective are corrected by the controller 50.

The display device 52 is a device for displaying various information. In the present embodiment, the display device 52 is a liquid crystal display installed on the operation panel 65, and displays various images output by the controller 50.

A retaining plate 70 is a plate member for preventing the pavement material fed by the screw SC in the vehicle width direction from scattering in front of the screw SC so that the pavement material can be properly fed by the screw SC in the vehicle width direction.

A side plate 71 is also mounted on the distal end of a mold board 72. The mold board 72 is a member for adjusting the amount of pavement material remaining in front of the left extendable screed 31L and the right extendable screed 31R among the pavement materials spread out by the screws SC, and is configured to be extendable and retractable in the vehicle width direction together with the left extendable screed 31L and the right extendable screed 31R.

### <Computer>

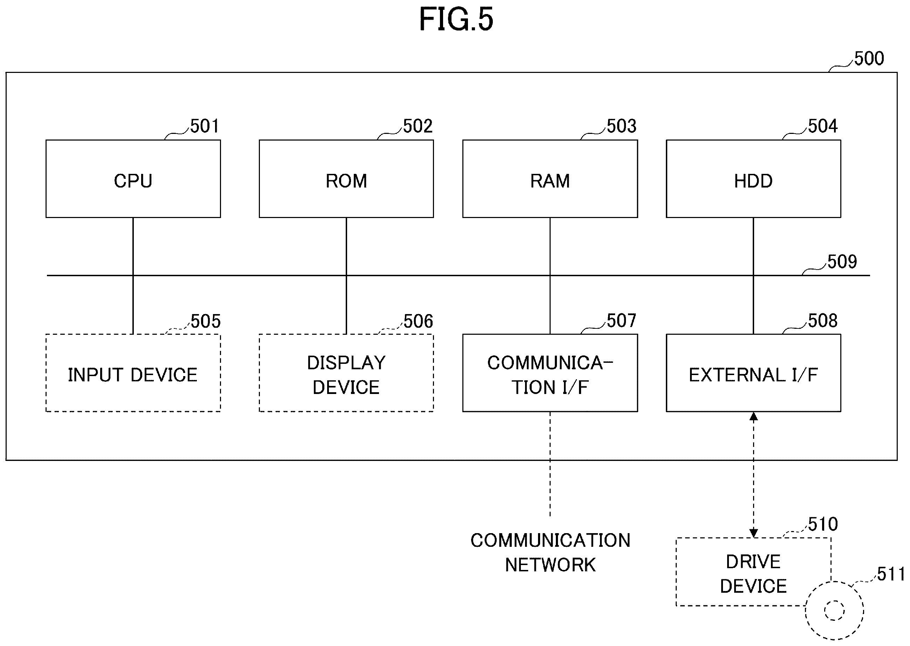

The controller 50, the communication terminal 200, and the remote management device 300 of the asphalt finisher 100 are realized by, for example, a computer. FIG. 5 is a block diagram illustrating an example of the hardware configuration of the computer according to the first embodiment.

As illustrated in FIG. 5, the computer 500 includes a central processing unit (CPU) 501, a read only memory (ROM) 502, a random access memory (RAM) 503, a hard disk drive (HDD) 504, an input device 505, a display device 506, a communication interface (I/F) 507, and an external I/F 508. The CPU 501, the ROM 502, and the RAM 503 form what is known as a computer. Each piece of hardware in the computer 500 is interconnected via a bus line 509. The input device 505 and the display device 506 may be connected to the external I/F 508 for use.

The CPU 501 is an arithmetic unit that reads programs and data from a storage such as the ROM 502 or the HDD 504 into the RAM 503 and executes processing, thereby realizing the control and functions of the entire computer 500. The computer 500 may have a graphics processing unit (GPU) in addition to or instead of the CPU 501.

The ROM 502 is an example of a nonvolatile semiconductor memory (storage) that can hold programs and data even when the power is turned off. The ROM 502 functions as a main storage that stores various programs and data necessary for the CPU 501 to execute various programs installed in the HDD 504. Specifically, the ROM 502 stores boot programs such as basic input/output system (BIOS) and extensible firmware interface (EFI) that are executed when the computer 500 is started, operating system (OS) settings, network settings, and other data.

The RAM 503 is an example of a volatile semiconductor memory (storage) whose programs and data are erased when the power is turned off. The RAM 503 is, for example, a dynamic random access memory (DRAM) or a static random access memory (SRAM). The RAM 503 provides a work area developed when various programs installed in the HDD 504 are executed by the CPU 501.

The HDD 504 is an example of a nonvolatile storage that stores programs and data. Programs and data stored in the HDD 504 include an OS, which is basic software that controls the entire computer 500, and applications that provide various functions on the OS. In place of the HDD 504, the computer 500 may use a storage that uses a flash memory (for example, a solid state drive: SSD) as a storage medium.

The input device 505 is a touch panel, operation keys and buttons, a keyboard, and a mouse that are used by a user to input various signals; a microphone for inputting sound data such as voice; and the like.

The display device 506 includes a liquid crystal, organic electro-luminescence (EL), or other display for displaying a screen, and a speaker for outputting sound data such as voice.

The communication I/F 507 is an interface for connecting to a communication network and allowing the computer 500 to perform data communication.

The external I/F 508 is an interface with an external device. The external device includes a drive device 510 and the like.

The drive device 510 is a device for setting a recording medium 511. The recording medium 511 includes a medium for recording information optically, electrically, or magnetically, such as a CD-ROM, a flexible disk, a magneto-optical disk, and the like. The recording medium 511 may also include a semiconductor memory for recording information electrically, such as a ROM, a flash memory, and the like. Thus, the computer 500 can read and/or write to the recording medium 511 via the external I/F 508.

The various programs installed in the HDD 504 are installed, for example, when the distributed recording medium 511 is set in the drive device 510 connected to the external I/F 508 and the various programs recorded in the recording medium 511 are read out by the drive device 510. Alternatively, the various programs installed in the HDD 504 may be installed by being downloaded from another network different from the communication network, via the communication I/F 507.

### <Functional Configuration of Road Surface Paving System>

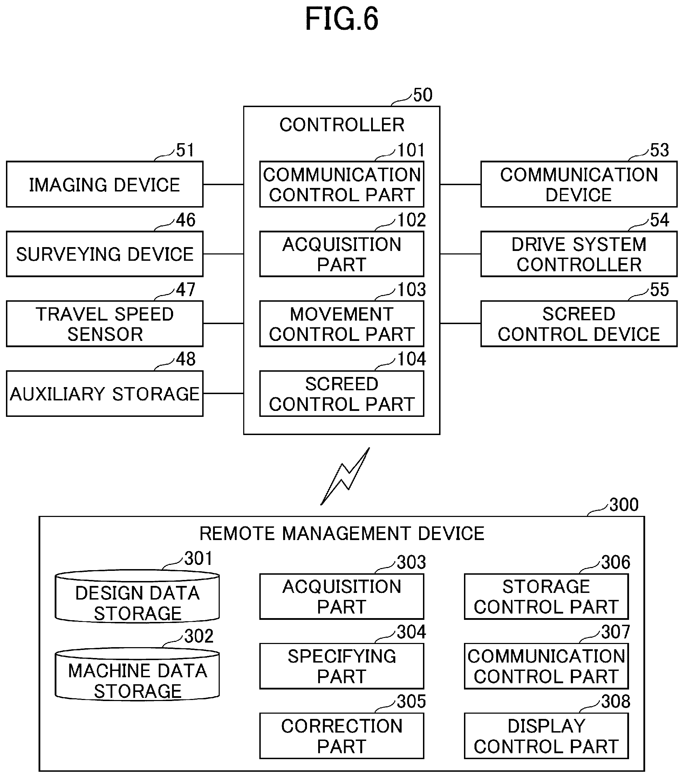

The functional configuration of the road surface paving system SYS will be described with reference to FIG. **6.** FIG. 6 is a block diagram illustrating an example of the functional configuration of the road surface paving system according to the first embodiment.

### <<Remote Management Device>>>

As illustrated in FIG. **6****,** the remote management device 300 includes a design data storage 301, a machine data storage 302, an acquisition part 303, a specifying part 304, a correction part 305, a storage control part 306, a communication control part 307, and a display control part 308.

Design data indicating the area of the road surface to be constructed by the asphalt finisher 100 is stored in the design data storage 301. The design data includes linear data and cross-sectional shape data that indicate the shape of the road. In other words, the design data indicates the shape of the edge of the road surface to be constructed.

Machine data relating to the asphalt finisher 100 is stored in the machine data storage 302. The machine data may be prepared for each machine of a plurality of asphalt finishers 100 or for each model of the asphalt finishers 100. In the present embodiment, the machine data includes information relating to the operating speed of the asphalt finisher 100 and information relating to the shape of the asphalt finisher 100. The information relating to the operating speed includes the traveling speed of the asphalt finisher 100 and the extension and retraction speed of the screed. The information relating to the shape includes the shape of the screed. The traveling speed of the asphalt finisher 100 is the speed at which the asphalt finisher 100 travels while paving the road surface by the automatic pavement function.

The design data and the machine data may be the design data and the machine data generated in advance by an external device and transferred to and stored in the remote management device 300 via a wired or wireless interface. The design data and the machine data may also be the design data and the machine data read from a portable storage medium into the remote management device 300 and stored therein.

The acquisition part 303 acquires the design data and the machine data. In the present embodiment, the acquisition part 303 reads the design data from the design data storage 301. The acquisition part 303 reads the machine data from the machine data storage 302.

Based on the design data and the machine data acquired by the acquisition part 303, the specifying part 304 specifies an area to be excluded from the road surface to be constructed by the asphalt finisher 100 (hereinafter, "construction exclusion area"). In the present embodiment, the specifying part 304 specifies, as a construction exclusion area, an area of the road surface that is difficult to be constructed by the asphalt finisher 100 due to a change in the shape of the edge of the road surface indicated in the design data.

Specifically, the specifying part 304 specifies the construction exclusion area based on the shape of the edge of the road surface, the traveling speed of the asphalt finisher 100, and the extension and retraction speed of the screed 3. The traveling speed of the asphalt finisher 100 may vary depending on the condition of the road surface to be constructed. Therefore, the specifying part 304 may adjust the traveling speed of the asphalt finisher 100 according to the road surface to be constructed indicated in the design data.

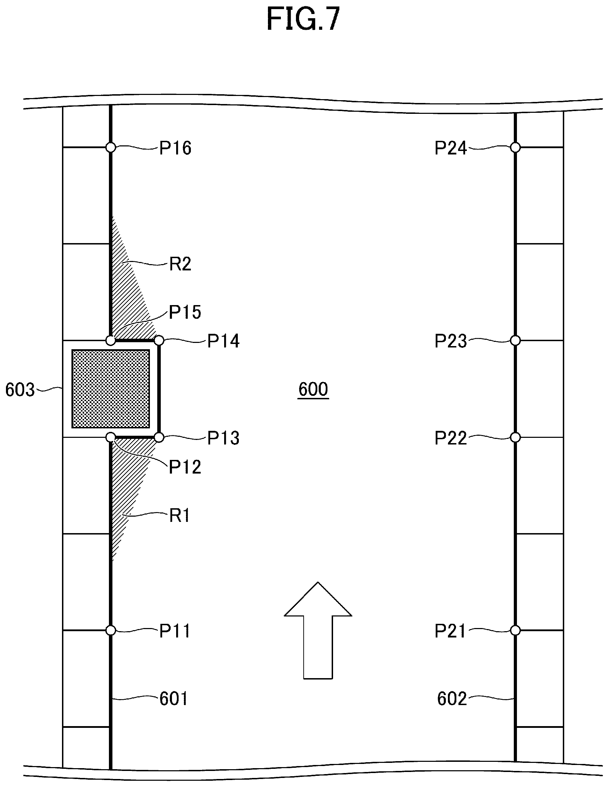

More specifically, the specifying part 304 specifies a location where the rate at which the shape of the edge of the road surface changes in the lateral direction is greater than the extension and retraction speed of the screed 3. FIG. 7 is a diagram illustrating an example of design data before correction. As illustrated in FIG. 7, the road surface 600 to be constructed is indicated in the design data before correction. The road surface 600 is the area sandwiched between a left edge 601 and a right edge 602. The shape of the left edge 601 is defined by passing points P11 to P16. Similarly, the shape of the right edge 602 is defined by passing points P21 to P24.

In the example illustrated in FIG. 7, a stormwater inlet 603 is installed on the shoulder of the road surface 600. Because the stormwater inlet 603 protrudes toward the road, the left edge 601 is greatly changed in the lateral direction with respect to the traveling direction of the asphalt finisher 100 at passing points P12, P13, P14, and P15. In order to construct the road surface 600 having such a left edge 601, it is necessary to retract the left extendable screed 31L to the passing point P13 at the passing point P12, and to extend the left extendable screed 31L to the passing point P15 at the passing point P14.

However, it is not preferable to stop the progress of the asphalt finisher 100 during construction because it affects the construction quality. Moreover, because the extension and retraction speed of the screed 3 is limited, it is also difficult to instantaneously extend and retract at the passing point P12 or the passing point P14. Therefore, in the design data illustrated in Fig. 7, it is necessary to provide construction exclusion areas R1 and R2 in front of and behind the stormwater inlet 603.

The construction exclusion area R1 is an area in which the pavement material is not spread evenly (in other words, not constructed) by the left extendable screed 31L when the left extendable screed 31L is retracted such that the retraction is completed at the passing point P13. Similarly, the construction exclusion area R2 is an area in which the pavement material is not spread evenly (in other words, not constructed) by the left extendable screed 31L when the extension of the left extendable screed 31L is started at the passing point P14.

Because the construction exclusion areas R1 and R2 are not constructed by the asphalt finisher 100, they must be manually constructed by a worker at the work site. In the manual construction, the pavement material in the hopper 2 of the asphalt finisher 100 or around the screw SC is used. Therefore, when the design data indicating the construction exclusion area can be checked at the work site, it is possible for the worker to go ahead and wait at the position to be manually constructed, or for the user who gives instructions at the work site to give appropriate instructions at the work site. Because the manually constructed area tends to be easily damaged, it is useful for quality control and maintenance management when the design data indicating the construction exclusion area is stored and managed so as to be referred to later.

The correction part 305 corrects the design data acquired by the acquisition part 303, based on the construction exclusion area specified by the specifying part 304. Hereinafter, the design data corrected by the correction part 305 is also referred to as "corrected data". In the present embodiment, the correction part 305 generates corrected data by excluding the construction exclusion area from the road surface to be constructed illustrated in the design data.

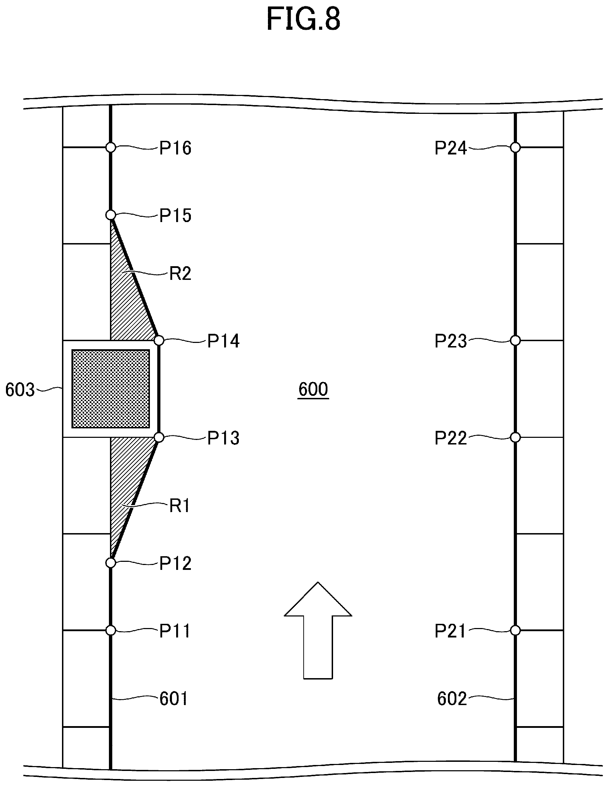

FIG. 8 is a diagram illustrating an example of the design data after correction. As illustrated in FIG. 8, in the design data after correction, it is corrected such that the passing point P12 where a large shape change occurs at the left edge 601 due to the stormwater inlet 603 is nearer in the traveling direction, and the passing point P15 is farther in the traveling direction. In the design data after correction, the retraction of the left extendable screed 31L is started at the passing point P12, and the extension of the left extendable screed 31L is started at the passing point P14. In other words, the correction part 305 determines a point at which the extension of the left extendable screed 31L is started in order to exclude the construction exclusion areas R1 and R2 from the construction area. As a result, the construction exclusion area R1 in front of the stormwater inlet 603 and the construction exclusion area R2 behind the stormwater inlet 603 are excluded from the road surface to be constructed by the asphalt finisher 100.

The storage control part 306 stores the corrected data corrected by the correction part 305 in the design data storage 301. The storage control part 306 stores the corrected data in the design data storage 301 together with the design data before correction acquired by the acquisition part 303. Further, the storage control part 306 associates the corrected data with date and time information, and stores the data in the storage control part 306 in time series. The date and time information may be, for example, information indicating a date and time when the corrected data is generated, or information indicating a date and time when construction using the corrected data is completed. That is, the storage control part 306 stores the corrected data in the storage control part 306. Thus, the user of the road surface paving system SYS can easily check the area excluded from the road surface to be constructed (that is, the manually constructed area) when referring to the past design data.

The communication control part 307 transmits the corrected data corrected by the correction part 305 to the asphalt finisher 100. In the asphalt finisher 100, the communication control part 101 of the controller 50 receives the corrected data via the communication device 53, and stores the received corrected data in the auxiliary storage 48.

The communication control part 307 also transmits the corrected data corrected by the correction part 305 to the communication terminal 200. The communication terminal 200 displays the corrected data received from the remote management device 300 on the display device 506. In the present embodiment, the communication terminal 200 displays on the display device 506 of the communication terminal 200 a map indicating the road surface to be constructed indicated in the corrected data (that is, the road surface to be constructed from which the area specified by the specifying part 304 is excluded). Thus, the user of the communication terminal 200 can easily check the area excluded from the road surface to be constructed.

The display control part 308 displays on the display device 506 the corrected data corrected by the correction part 305 in response to the user's operation. In the present embodiment, the display control part 308 displays on the display device 506 of the remote management device 300 a map indicating the road surface to be constructed indicated in the corrected data (that is, the road surface to be constructed from which the area specified by the specifying part 304 is excluded). Thus, the user of the remote management device 300 can easily check the area excluded from the road surface to be constructed.

### <Controller of Asphalt Finisher>

As illustrated in FIG. 6, a surveying device 46, a travel speed sensor 47, an auxiliary storage 48, an imaging device 51, a communication device 53, a drive system controller 54, and a screed control device 55 are connected to the controller 50.

The surveying device 46 receives a signal including time information from a positioning satellite and surveys the current position of the asphalt finisher 100. For example, the surveying device 46 receives position information indicating a two-dimensional or three-dimensional positioning result by global positioning system (GPS) or global navigation satellite system (GNSS). The position information includes information representing the position of the asphalt finisher 100 in terms of latitude and longitude. Although the present embodiment uses GPS as the position information acquisition method, the position information acquisition method is not limited and other known methods may be used.

The travel speed sensor 47 is configured to detect the traveling speed of the asphalt finisher 100. For example, the travel speed sensor 47 is an encoder for detecting the angular velocity of the rotation axis of the rear wheel traveling motor for driving the rear wheel of the tractor 1. The travel speed sensor 47 may be configured by a proximity switch and the like for detecting a slit formed on the rotating plate.

Design data is stored in the auxiliary storage 48. The design data stored in the auxiliary storage 48 is the corrected data corrected by the remote management device 300.

The communication device 53 performs wireless communication with a device around the asphalt finisher 100, a server managing a work site, or the like. For example, the communication device 53 performs wireless communication using one or more of Wi-Fi (registered trademark), wireless LAN, Bluetooth (registered trademark), or the like as a wireless communication standard.

The drive system controller 54 controls the tractor 1 according to a control command. For example, the drive system controller 54 performs rotation control (speed control) for the rear wheel traveling motor of the tractor 1 and steering angle control for the front wheel (example of a drive wheel) of the tractor 1, in accordance with the steering angle and speed indicated by the control command.

The screed control device 55 is configured to control the extension and retraction amounts of the left extendable screed 31L and the right extendable screed 31R. For example, the screed control device 55 controls the flow rate of hydraulic oil flowing into a screed extension cylinder (not illustrated) for extending and retracting each of the left extendable screed 31L and the right extendable screed 31R. In response to the control command from the controller 50, the screed control device 55 switches between communicating and blocking a pipe line that connects the rod-side oil chamber of the screed extension cylinder and the hydraulic pump. Thus, extension and retraction of the left extendable screed 31L and the right extendable screed 31R can be realized.

More specifically, the controller 50 includes a communication control part 101, an acquisition part 102, a movement control part 103, and a screed control part 104 as functional blocks composed of software, hardware, or a combination thereof.

The communication control part 101 controls transmission and reception of information with an external device using the communication device 53. In the present embodiment, the communication control part 101 transmits and receives information with the communication terminal 200 or with the remote management device 300. In the present embodiment, the communication control part 101 receives corrected data from the remote management device 300. The communication control part 101 stores the corrected data received from the remote management device 300 in the auxiliary storage 48.

The acquisition part 102 acquires detection information from various sensors provided in the asphalt finisher 100. For example, the acquisition part 102 acquires image information captured by the imaging device 51 (the front camera 51F, the left camera 51L, and the right camera 51R). The acquisition part 102 also acquires position information measured by the surveying device 46. The acquisition part 102 also acquires detection information (for example, information including the speed of the asphalt finisher 100) detected by the travel speed sensor 47. Further, the acquisition part 102 reads the corrected data from the auxiliary storage 48.

The movement control part 103 outputs a control command for controlling the operation of the tractor 1 to the drive system controller 54. In the present embodiment, the movement control part 103 extracts a travel route from the corrected data acquired by the acquisition part 102, and outputs a control command indicating a steering angle and a speed to move along the extracted travel route to the drive system controller 54. Thus, the controller 50 performs automatic movement control of the tractor 1 so as to perform pavement processing along the travel route indicated in the corrected data.

The screed control part 104 outputs a control command for controlling the operation of the screed 3 to the screed control device 55. In the present embodiment, the screed control device 55 extracts the shape of the edge of the road surface from the corrected data acquired by the acquisition part 102, and outputs to the screed control device 55 a control command indicating the extension and retraction amounts of the left extendable screed 31L and the right extendable screed 31R so as to match the extracted shape of the edge. Thus, the controller 50 performs automatic extension and retraction control of the screed 3 so as to perform pavement processing according to the shape of the edge of the road surface indicated in the corrected data.

### <Correction Processing>

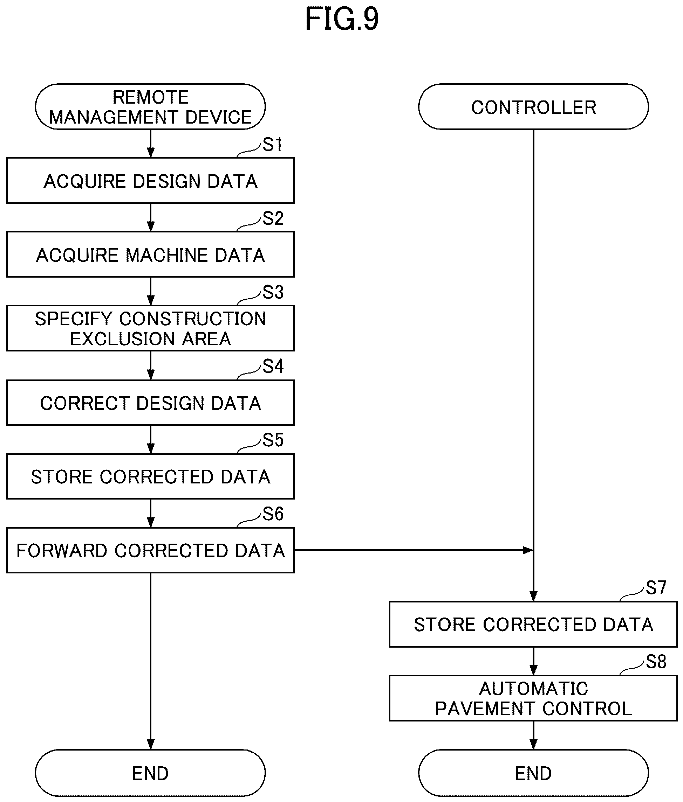

The correction processing performed by the remote management device 300 will be described with reference to FIG. 9. FIG. 9 is a sequence diagram illustrating an example of the correction processing according to the first embodiment. In the correction processing, the design data is corrected.

In step S1, the acquisition part 303 of the remote management device 300 reads the design data to be corrected from the design data storage 301. The acquisition part 303 may read the design data specified by the user, or may automatically select and read the design data that has not been corrected. The acquisition part 303 sends the read design data to the specifying part 304.

In step S2, the acquisition part 303 of the remote management device 300 reads the machine data from the machine data storage 302. The acquisition part 303 may read the machine data of the model or of each machine that is specified by the user, or may read the machine data of the asphalt finisher 100 used in the work site indicated by the design data read in step S1. The acquisition part 303 sends the read machine data to the specifying part 304.

In step S3, the specifying part 304 of the remote management device 300 receives the design data and the machine data from the acquisition part 303. Next, the specifying part 304 specifies the construction exclusion area based on the received design data and machine data. The specifying part 304 sends the design data and information indicating the construction exclusion area to the correction part 305. The information indicating the construction exclusion area is information in which the position and shape of the construction exclusion area can be specified. For example, the information indicating the construction exclusion area is position information (for example, latitude and longitude, and the like) defining the construction exclusion area.

In step S4, the correction part 305 of the remote management device 300 receives the information indicating the construction exclusion area from the specifying part 304. Next, the correction part 305 corrects the design data such that the construction exclusion area is excluded from the road surface to be constructed based on the information indicating the construction exclusion area. Then, the correction part 305 sends the corrected data to the storage control part 306 and the communication control part 307.

In step S5, the storage control part 306 of the remote management device 300 receives the corrected data from the correction part 305. Next, the storage control part 306 stores the received corrected data in the design data storage 301 together with the design data read in step S1. For example, the storage control part 306 stores the corrected data generated in step S4 in the design data storage 301 after saving the design data read in step S1. As a result, the design data storage 301 stores both the design data indicating the road surface to be constructed before correction and the corrected data indicating the construction exclusion area.

In step S6, the communication control part 307 of the remote management device 300 receives the corrected data from the correction part 305. Next, the communication control part 307 transmits the received corrected data to the asphalt finisher 100.

In step S7, the communication control part 101 of the controller 50 receives the corrected data from the remote management device 300 via the communication device 53. Next, the communication control part 101 stores the received corrected data in the auxiliary storage 48. When other design data (or corrected data) has already been stored in the auxiliary storage 48, it may be overwritten with the received corrected data, or the original design data may be saved and then the corrected data may be stored.

In step S8, the controller 50 starts automatic pavement control. Specifically, the acquisition part 102 of the controller 50 reads the corrected data from the auxiliary storage 48. Next, the acquisition part 102 acquires the detection results of various sensors. Thereafter, the controller 50 performs the automatic movement control by the movement control part 103 and the automatic extension and retraction control by the screed control part 104, based on the detection results of various sensors so that the area of the road surface to be constructed indicated in the corrected data (in other words, the area of the road surface where the construction exclusion area is excluded) is constructed. Thus, the asphalt finisher 100 can automatically pave the area of the road surface to be constructed from which the construction exclusion area is excluded.

### <Effect of First Embodiment>

The remote management device 300 according to the present embodiment specifies an area to be excluded from the road surface to be constructed by the road paving machine according to the change in the shape of the edge of the road surface to be constructed by the road paving machine, based on information on the operating speed of the road paving machine, and corrects an area of the road surface to be constructed based on the specified area. In one aspect, according to the present embodiment, the road surface to be constructed by the road paving machine can be accurately specified.

The road paving machine may include a screed that spreads evenly a pavement material spread on the road surface and is extendable and retractable in a vehicle width direction, and the remote management device 300 may specify the area to be excluded from the road surface to be constructed, based on the shape of the edge of the road surface, a traveling speed of the road paving machine, an extension and retraction speed of the screed, and a shape of the screed. Therefore, according to the present embodiment, the area that is difficult to be spread evenly with the screed can be excluded from the road surface to be constructed.

The remote management device 300 may determine a position where extension and retraction of the screed starts based on the area to be excluded from the object of construction. Therefore, according to the present embodiment, the extension and retraction of the screed can be controlled such that the area that is difficult to be spread evenly with the screed can be excluded from the road surface to be constructed.

The remote management device 300 may display corrected data on the display device 506. The remote management device 300 may display a map indicating the area to be excluded from the road surface to be constructed on the display device 506. Therefore, according to the present embodiment, the user who performs remote management of the work site can easily check the area that is excluded from the road surface to be constructed.

The remote management device 300 may display the corrected data on the display device 506 of the communication terminal 200 that is a portable information terminal. Therefore, according to the present embodiment, the user who manages the work at the work site can easily check the area excluded from the road surface to be constructed.

The remote management device 300 may store the corrected data in a storage. Therefore, according to the present embodiment, when a user refers to past design data, the area excluded from the road surface to be constructed can easily be checked.

In the present embodiment, an example of correcting the design data by the remote management device 300 performing the correction processing has been described, but the device performing the correction processing may be a device other than the remote management device 300. For example, the communication terminal 200 may perform the correction processing, and another device different from the communication terminal 200 and the remote management device 300 may perform the correction processing.

### [Second Embodiment]

In the first embodiment, the configuration has been described in which the remote management device 300 corrects the design data and the asphalt finisher 100 paves the road surface based on the corrected data. Here, it may be configured such that the controller 50 of the asphalt finisher 100 corrects the design data. In the second embodiment, the configuration will be described in which the asphalt finisher 100 corrects the design data and paves the road surface based on the corrected data.

Hereinafter, the asphalt finisher 100 according to the second embodiment will be described focusing on differences from the first embodiment.

### <Functional Configuration of Asphalt Finisher>

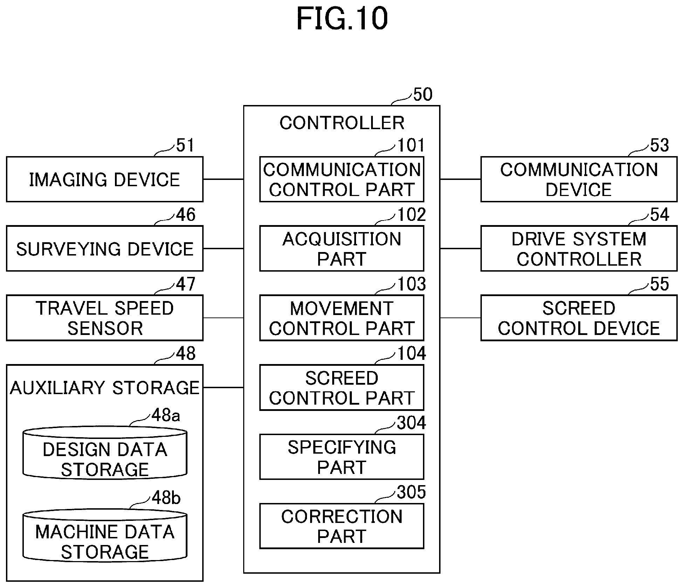

A functional configuration of the asphalt finisher 100 according to the present embodiment will be described with reference to FIG. 10. FIG. 10 is a block diagram illustrating an example of the functional configuration of the asphalt finisher according to the second embodiment.

As illustrated in FIG. 10, the surveying device 46, the travel speed sensor 47, the auxiliary storage 48, the imaging device 51, the communication device 53, the drive system controller 54, and the screed control device 55 are connected to the controller 50 according to the second embodiment as in the first embodiment.

The auxiliary storage 48 according to the second embodiment includes a design data storage 48a and a machine data storage 48b. The data stored in the design data storage 48a and the machine data storage 48b are the same as those in the design data storage 301 and the machine data storage 302 according to the first embodiment. However, the machine data storage 48b according to the second embodiment only needs to store the machine data related to the asphalt finisher 100 provided with the controller 50.

More specifically, the controller 50 according to the second embodiment includes the communication control part 101, the acquisition part 102, the movement control part 103, the screed control part 104, the specifying part 304, and the correction part 305 as functional blocks composed of software, hardware, or a combination thereof. That is, the controller 50 according to the second embodiment is different from that of the first embodiment in that it further includes the specifying part 304 and the correction part 305.

The acquisition part 102 according to the second embodiment acquires the design data to be corrected and the machine data, in addition to the image information captured by the imaging device 51, the detection information detected by the travel speed sensor 47, and the position information measured by the surveying device 46. The acquisition part 102 reads the design data from the design data storage 48a. The acquisition part 102 reads the machine data from the machine data storage 48b.

The specifying part 304 specifies the construction exclusion area based on the design data and the machine data acquired by the acquisition part 303. The method of specifying the construction exclusion area is the same as in the first embodiment.

The correction part 305 corrects the design data acquired by the acquisition part 303 based on the construction exclusion area specified by the specifying part 304. The method of correcting the design data is the same as in the first embodiment.

The movement control part 103 outputs a control command for controlling the operation of the tractor 1 to the drive system controller 54 based on the corrected data generated by the correction part 305. Thus, the controller 50 performs automatic movement control of the tractor 1 so as to perform pavement processing along the traveling route indicated by the corrected data.

The screed control part 104 outputs a control command for controlling the operation of the screed 3 to the screed control device 55 based on the corrected data generated by the correction part 305. Thus, the controller 50 performs automatic extension and retraction control of the screed 3 so as to perform pavement processing according to the shape of the edge of the road surface indicated in the corrected data.

The communication control part 101 transmits the corrected data corrected by the correction part 305 to the communication terminal 200. The communication terminal 200 displays the corrected data received from the controller 50 on the display device 506.

The communication control part 101 also transmits the corrected data corrected by the correction part 305 to the remote management device 300. The remote management device 300 stores the corrected data received from the controller 50 in a storage such as the HDD 504 of the remote management device 300. The remote management device 300 displays the corrected data stored in the storage on the display device 506 of the remote management device 300 in response to a user's operation.

### <Effect of Second Embodiment>

The asphalt finisher 100 according to the present embodiment specifies an area to be excluded from the road surface to be constructed by the asphalt finisher 100 according to the change in the shape of the edge of the road surface to be constructed by the asphalt finisher 100, based on information on the operating speed of the asphalt finisher 100, corrects an area of the road surface to be constructed based on the specified area, and performs construction on the corrected area of the road surface to be constructed. In one aspect, according to the present embodiment, it is possible to accurately construct a road surface where the shape of the edge of the road surface changes.

The asphalt finisher 100 may have a function of automatically paving the road surface based on the corrected data. Therefore, according to the present embodiment, it is possible to efficiently construct the road surface where the shape of the edge of the road surface changes.

### [Third Embodiment]

In the first embodiment, the construction exclusion area is specified based on the design data and the machine data, and the design data is corrected such that the construction exclusion area is excluded from the road surface to be constructed. Because the design data is created at a place different from the work site, there is a possibility that there is a difference from the actual road surface at the work site. In the third embodiment, a configuration will be described in which the corrected data is further corrected based on a detection result of detecting the road surface at the work site.

Hereinafter, a road surface paving system SYS according to the third embodiment will be described focusing on differences from the first embodiment. Here, an example of applying a configuration of the third embodiment to the first embodiment will be described, but similarly, the configuration of the third embodiment can be applied to the second embodiment.

### <Functional Configuration of Road Surface Paving System>

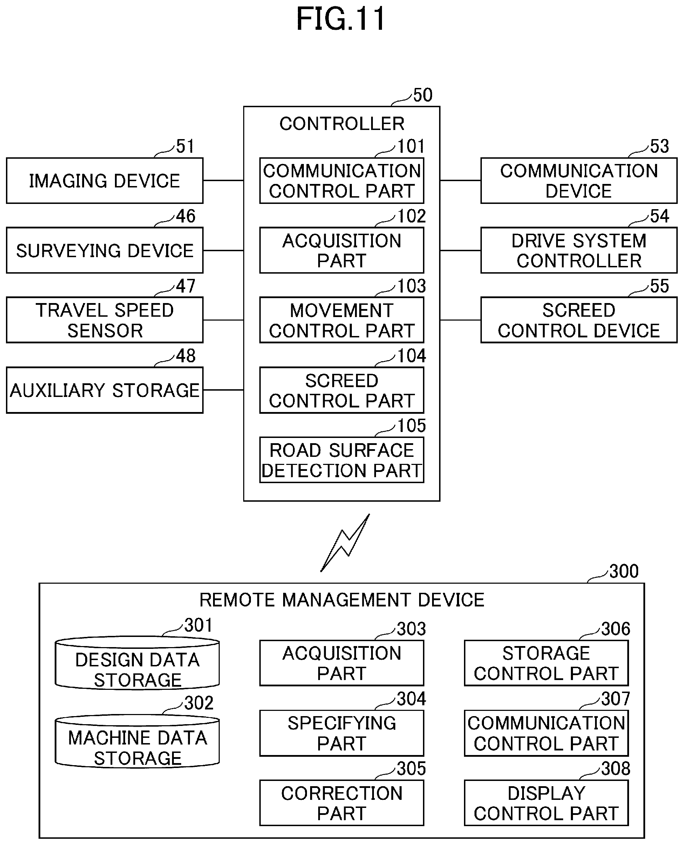

A functional configuration of the road surface paving system SYS according to the present embodiment will be described with reference to FIG. 11. FIG. 11 is a block diagram illustrating an example of the functional configuration of the road surface paving system according to the third embodiment.

### <<Controller of Asphalt Finisher>>

As illustrated in FIG. 10, the surveying device 46, the travel speed sensor 47, the auxiliary storage 48, the imaging device 51, the communication device 53, the drive system controller 54, and the screed control device 55 are connected to the controller 50 according to the third embodiment as in the first embodiment.

More specifically, the controller 50 according to the third embodiment includes the communication control part 101, the acquisition part 102, the movement control part 103, the screed control part 104, and the road surface detection part 105 as functional blocks composed of software, hardware, or a combination thereof. That is, the controller 50 according to the third embodiment is different from that of the first embodiment in that it further includes the road surface detection part 105.

The road surface detection part 105 detects the road surface to be constructed by the asphalt finisher 100 based on image information captured by the imaging device 51. In the present embodiment, the road surface detection part 105 detects the shape of the left and right edges of the road surface in the traveling direction of the asphalt finisher 100. In other words, the road surface detection part 105 detects the shape of the edge of the road surface before construction by the asphalt finisher 100.

The communication control part 101 according to the third embodiment transmits the road surface detection result detected by the road surface detection part 105 to the remote management device 300. The remote management device 300 temporarily stores the road surface detection result received from the controller 50 in a storage such as the HDD 504 of the remote management device 300.

### <<Remote Management Device>>

As illustrated in FIG. 11, the remote management device 300 according to the third embodiment includes the design data storage 301, the machine data storage 302, the acquisition part 303, the specifying part 304, the correction part 305, the storage control part 306, the communication control part 307, and the display control part 308. That is, the remote management device 300 according to the third embodiment includes processing parts similar to those of the first embodiment.

The acquisition part 303 according to the third embodiment acquires the road surface detection result obtained by detecting the road surface to be constructed. The road surface detection result indicates the shape of the edge of the road surface detected at the work site. In the present embodiment, the acquisition part 303 acquires the road surface detection result by reading the road surface detection result detected by the asphalt finisher 100 and transferred to the remote management device 300 from the storage.

However, the road surface detection result may be a result of detecting the road surface by an external device other than the asphalt finisher 100. The external device may be, for example, a dump truck for supplying a pavement material to the asphalt finisher 100. Further, the external device may be, for example, an unmanned aerial vehicle also called a drone or the like.

The correction part 305 according to the third embodiment further corrects the corrected data based on the road surface detection result acquired by the acquisition part 303. Hereinafter, the design data further corrected by the correction part 305 is also referred to as "recorrected data". More specifically, the correction part 305 corrects the shape of the end of the road surface to be constructed indicated in the corrected data (that is, the road surface to be constructed from which the area specified by the specifying part 304 is excluded) so as to match the shape of the edge indicated in the road surface detection result. When the shape of the edge of the road surface indicated in the corrected data is corrected, the correction part 305 corrects the construction exclusion area so as to match the shape of the edge of the road surface after correction.

The storage control part 306 according to the third embodiment stores the recorrected data generated by the correction part 305 in the design data storage 301. The storage control part 306 may overwrite the corrected data generated by the correction part 305 with the recorrected data, or may store the recorrected data together with the corrected data in the design data storage 301.

### <Recorrection Processing>

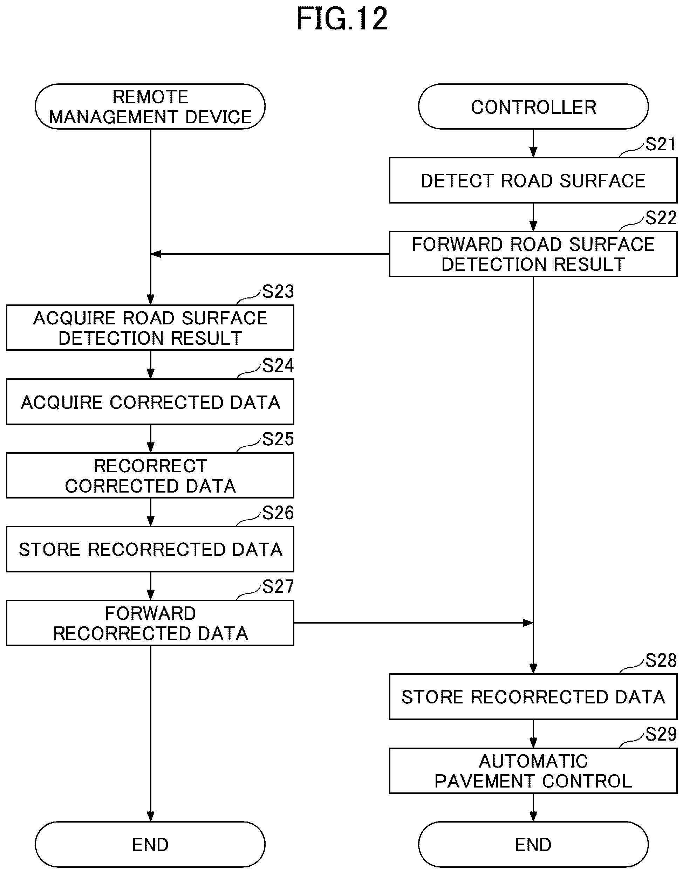

The recorrection processing performed by the remote management device 300 will be described with reference to FIG. 12. FIG. 12 is a sequence diagram illustrating an example of the recorrection processing according to the third embodiment. In the recorrection processing, the corrected data is recorrected based on the road surface detection result.

In step S21, the acquisition part 102 of the controller 50 acquires the image information captured by the imaging device 51. Next, the acquisition part 102 sends the acquired image information to the road surface detection part 105. The road surface detection part 105 detects the road surface to be constructed by the asphalt finisher 100 based on the image information received from the acquisition part 102.

In step S22, the road surface detection part 105 of the controller 50 sends the road surface detection result obtained by detecting the road surface in step S21 to the communication control part 101. The communication control part 101 transmits the road surface detection result received from the road surface detection part 105 to the remote management device 300.

In step S23, the acquisition part 303 of the remote management device 300 receives the road surface detection result from the controller 50. Next, the acquisition part 303 stores the received road surface detection result in the storage.

In step S24, the acquisition part 303 of the remote management device 300 reads the road surface detection result from the storage. Next, the acquisition part 303 reads the corrected data to be recorrected from the design data storage 301. The corrected data to be recorrected is the corrected data in which the road surface indicated in the road surface detection result is the road surface to be constructed. Then, the acquisition part 303 sends the road surface detection result and the corrected data to the correction part 305.

In step S25, the correction part 305 of the remote management device 300 receives the road surface detection result and the corrected data from the acquisition part 303. Next, the correction part 305 further corrects the corrected data based on the road surface detection result. Then, the correction part 305 sends the recorrected data to the storage control part 306 and the communication control part 307.

In step S26, the storage control part 306 of the remote management device 300 receives the recorrected data from the correction part 305. Next, the storage control part 306 stores the received recorrected data in the design data storage 301 together with the corrected data read in step S24.

In step S27, the communication control part 307 of the remote management device 300 receives the recorrected data from the correction part 305. Next, the communication control part 307 transmits the received recorrected data to the asphalt finisher 100.

In step S28, the communication control part 101 of the controller 50 receives the recorrected data from the remote management device 300 via the communication device 53. Next, the communication control part 101 stores the received recorrected data in the auxiliary storage 48.

In step S29, the controller 50 starts automatic pavement control. As a result, the asphalt finisher 100 can automatically pave the area of the road surface to be constructed on which the road surface detection result is reflected.

### <Effect of Third Embodiment>

The remote management device 300 according to the present embodiment acquires the detection result of detecting the shape of the edge of the road surface, and further corrects the corrected data based on the detection result. In one aspect, according to the present embodiment, it is possible to accurately specify the road surface to be constructed by the road paving machine while reflecting the actual shape of the edge of the road surface.

### DESCRIPTION OF THE REFERENCE NUMERALS

1: Tractor
2: Hopper
3: Screed
46: Surveying device
47: Travel speed sensor
48: Auxiliary storage
50: Controller
51: Imaging device
53: Communication device
54: Drive system controller
55: Screed control device
100: Asphalt finisher
101: Communication control part
102: Acquisition part
103: Movement control part
104: Screed control part
200: Communication terminal
300: Remote management device
301: Design data storage
302: Machine data storage
303: Acquisition part
304: Specifying part
305: Correction part
306: Storage control part
307: Communication control part
308: Display control part
CV: Conveyor
SC: Screw
SYS: Road surface paving system

## Claims

1. An information processing apparatus (300) comprising:
a specifying part (304) configured to specify an area to be excluded (R1, R2) from a road surface (600) to be constructed by a road paving machine (100) according to a change in a shape of an edge (601, 602) of the road surface (600), based on information on an operating speed of the road paving machine (100); and
a correction part (305) configured to correct an area of the road surface(600), based on the specified area to be excluded (R1, R2);
the apparatus (300) is further configured to provide the corrected area to the road paving machine (100) to autonomously perform construction on the corrected area;
wherein the road paving machine (100) includes a screed (3) that spreads evenly a pavement material spread on the road surface (600) and is extendable and retractable in a vehicle width direction,
**characterized in that** the specifying part (304) is configured to specify the area to be excluded (R1, R2), based on the shape of the edge (601, 602) of the road surface (600), a traveling speed of the road paving machine (100) at which the road paving machine (100) travels while paving the road surface (600) by an automatic pavement function, the traveling speed being included in the information on the operating speed of the road paving machine (100), an extension and retraction speed of the screed (3), and a shape of the screed (3).

2. The information processing apparatus (300) according to claim 1, further comprising:
an acquisition part (303) configured to acquire design data indicating the area of the road surface (600), wherein
the correction part (305) is configured to correct the area of the road surface (600) indicated in the design data, based on the specified area to be excluded(R1, R2).

3. The information processing apparatus (300) according to claim 2, wherein
the acquisition part (303) is configured to acquire a detection result of detecting the shape of the edge (601, 602) of the road surface (600), and
the correction part (305) is configured to correct the area of the road surface (600) indicated in the design data, based on the specified area to be excluded (R1, R2) and the detection result.

4. The information processing apparatus (300) according to claim 1, further comprising:
an acquisition part (303) configured to acquire a detection result of detecting the shape of the edge (601, 602) of the road surface (600), wherein
the correction part (305) is configured to correct the area of the road surface (600), based on the specified area to be excluded (R1, R2) and the detection result.

5. The information processing apparatus (300) according to claim 1, wherein
the correction part (305) is configured to determine a position where extension or retraction of the screed (3) starts based on the specified area to be excluded (R1, R2).

6. The information processing apparatus (300) according to any one of claims 1 to 5, further comprising:
a display control part (308) configured to display, on a display device (506), design data indicating the corrected area of the road surface (600).

7. The information processing apparatus (300) according to claim 6, wherein
the display control part (308) is configured to display a map indicating the specified area to be excluded (R1, R2) at the corrected area of the road surface (600).

8. The information processing apparatus (300) according to claim 6, wherein
the display control part (308) displays design data indicating the corrected area of the road surface (600) on the display device (506) of a portable information terminal (200).

9. The information processing apparatus (300) according to any one of claims 1 to **5,** further comprising:
a storage control part (306) configured to store, in the storage (301), design data indicating the corrected area of the road surface (600).

10. A road surface paving system (SYS) comprising a road paving machine (100) and an information processing apparatus (300) according to any of claims 1 to **9,** the road paving machine (100) and the information processing apparatus (300) communicating with each other via a network (NT), wherein
the road paving machine (100) is configured to perform construction on the corrected area of the road surface (600).

11. A road paving machine (100) comprising:
an information processing apparatus (300) according to any of claims 1 to **9,** wherein
the road paving machine (100) is configured to perform construction on the corrected area of the road surface (600).

12. The road paving machine (100) according to claim 11, having a function of automatically paving the corrected area of the road surface (600).

13. A program for causing a computer (500) to execute:
specifying an area to be excluded (R1, R2) from a road surface (600) to be constructed by a road paving machine (100) according to a change in a shape of an edge (601, 602) of the road surface (600), based on information on an operating speed of the road paving machine (100); and
correcting an area of the road surface (600), based on the specified area to be excluded (R1, R2),
providing the corrected area to the road paving machine (100) to autonomously perform construction on the corrected area;
wherein the road paving machine (100) includes a screed (3) that spreads evenly a pavement material spread on the road surface (600) and is extendable and retractable in a vehicle width direction,
**characterized in that** the area to be excluded (R1, R2) is specified based on the shape of the edge (601, 602) of the road surface (600), a traveling speed of the road paving machine (100) at which the road paving machine (100) travels while paving the road surface (600) by an automatic pavement function, the traveling speed being included in the information on the operating speed of the road paving machine (100), an extension and retraction speed of the screed (3), and a shape of the screed (3).

## Patentansprüche

1. Informationsverarbeitungsvorrichtung (300), umfassend:
ein Spezifizierungsteil (304), das so konfiguriert ist, dass es einen auszuschließenden Bereich (R1, R2) von einer Straßenoberfläche (600), die von einer Straßenfertigermaschine (100) gebaut werden soll, entsprechend einer Änderung bei einer Form einer Kante (601, 602) der Straßenoberfläche (600), auf Grundlage von Informationen über eine Betriebsgeschwindigkeit der Straßenfertigermaschine (100) spezifiziert; und
ein Korrekturteil (305), das so konfiguriert ist, dass es einen Bereich der Straßenoberfläche (600) auf Grundlage des spezifizierten auszuschließenden Bereichs (R1, R2) korrigiert;
wobei die Vorrichtung (300) ferner so konfiguriert ist, dass sie den korrigierten Bereich für die Straßenfertigermaschine (100) bereitstellt, um Bauarbeit an dem korrigierten Bereich autonom durchzuführen;
wobei die Straßenfertigermaschine (100) eine Bohle (3) aufweist, die ein Belagmaterial, das auf der Straßenoberfläche (600) verteilt wurde, gleichmäßig verteilt und in einer Fahrzeugbreitenrichtung ausfahrbar und einfahrbar ist,
**dadurch gekennzeichnet, dass** das Spezifizierungsteil (304) so konfiguriert ist, dass es den auszuschließenden Bereich (R1, R2) auf Grundlage der Form der Kante (601, 602) der Straßenoberfläche (600), einer Fahrgeschwindigkeit der Straßenfertigermaschine (100), mit der die Straßenfertigermaschine (100) während Fertigen der Straßenoberfläche (600) durch eine automatische Fertigungsfunktion fährt, wobei die Fahrgeschwindigkeit in den Informationen über die Betriebsgeschwindigkeit der Straßenfertigermaschine (100) enthalten ist, einer Ausfahrgeschwindigkeit und Einfahrgeschwindigkeit der Bohle (3) sowie einer Form der Bohle (3), spezifiziert.

2. Informationsverarbeitungsvorrichtung (300) nach Anspruch 1, ferner umfassend:
ein Erfassungsteil (303), das so konfiguriert ist, dass es Konstruktionsdaten erfasst, die den Bereich der Straßenoberfläche (600) angeben, wobei
das Korrekturteil (305) so konfiguriert ist, dass es den Bereich der Straßenoberfläche (600), der in den Konstruktionsdaten angegeben wird, auf Grundlage des spezifizierten auszuschließenden Bereichs (R1, R2) korrigiert.

3. Informationsverarbeitungsvorrichtung (300) nach Anspruch 2, wobei
das Erfassungsteil (303) so konfiguriert ist, dass es ein Detektionsergebnis der Detektion der Form der Kante (601, 602) der Straßenoberfläche (600) erfasst, und
das Korrekturteil (305) so konfiguriert ist, dass es den Bereich der Straßenoberfläche (600), der in den Konstruktionsdaten angegeben wird, auf Grundlage des spezifizierten auszuschließenden Bereichs (R1, R2) und des Detektionsergebnisses korrigiert.

4. Informationsverarbeitungsvorrichtung (300) nach Anspruch 1, ferner umfassend:
ein Erfassungsteil (303), das so konfiguriert ist, dass es ein Detektionsergebnis der Detektion der Form der Kante (601, 602) der Straßenoberfläche (600) erfasst, wobei
das Korrekturteil (305) so konfiguriert ist, dass es den Bereich der Straßenoberfläche (600) auf Grundlage des spezifizierten auszuschließenden Bereichs (R1, R2) und des Detektionsergebnisses korrigiert.

5. Informationsverarbeitungsvorrichtung (300) nach Anspruch 1, wobei
das Korrekturteil (305) so konfiguriert ist, dass es eine Position bestimmt, an der Ausfahren oder Einfahren der Bohle (3) auf Grundlage des spezifizierten auszuschließenden Bereichs (R1, R2) startet.

6. Informationsverarbeitungsvorrichtung (300) nach einem der Ansprüche 1 bis 5, ferner umfassend:
ein Anzeigesteuerungsteil (308), das so konfiguriert ist, dass es auf einer Anzeigevorrichtung (506) Konstruktionsdaten anzeigt, die den korrigierten Bereich der Straßenoberfläche (600) angeben.

7. Informationsverarbeitungsvorrichtung (300) nach Anspruch 6, wobei
das Anzeigesteuerungsteil (308) so konfiguriert ist, dass es eine Karte anzeigt, die den spezifizierten auszuschließenden Bereich (R1, R2) an dem korrigierten Bereich der Straßenoberfläche (600) angibt.

8. Informationsverarbeitungsvorrichtung (300) nach Anspruch 6, wobei
das Anzeigesteuerungsteil (308) Konstruktionsdaten, die den korrigierten Bereich der Straßenoberfläche (600) auf der Anzeigevorrichtung (506) eines tragbaren Informationsendgeräts (200) angeben, anzeigt.

9. Informationsverarbeitungsvorrichtung (300) nach einem der Ansprüche 1 bis 5, ferner umfassend:
ein Speichersteuerungsteil (306), das so konfiguriert ist, dass es in dem Speicher (301) Konstruktionsdaten speichert, die den korrigierten Bereich der Straßenoberfläche (600) angeben.

10. Straßenoberflächenfertigersystem (SYS), umfassend eine Straßenfertigermaschine (100) und eine Informationsverarbeitungsvorrichtung (300) nach einem der Ansprüche 1 bis 9, wobei die Straßenfertigermaschine (100) und die Informationsverarbeitungsvorrichtung (300) via ein Netzwerk (NT) miteinander kommunizieren, wobei
die Straßenfertigermaschine (100) so konfiguriert ist, dass sie Bauarbeit an dem korrigierten Bereich der Straßenoberfläche (600) durchführt.

11. Straßenfertigermaschine (100), umfassend:
eine Informationsverarbeitungsvorrichtung (300) nach einem der Ansprüche 1 bis 9, wobei
die Straßenfertigermaschine (100) so konfiguriert ist, dass sie Bauarbeit an dem korrigierten Bereich der Straßenoberfläche (600) durchführt.

12. Straßenfertigermaschine (100) nach Anspruch 11, die eine Funktion zum automatischen Fertigen des korrigierten Bereichs der Straßenoberfläche (600) aufweist.

13. Programm, das einen Computer (500) veranlasst, auszuführen:
Spezifizieren eines auszuschließenden Bereichs (R1, R2) aus einer Straßenoberfläche (600), die von einer Straßenfertigermaschine (100) gebaut werden soll, entsprechend einer Änderung bei einer Form einer Kante (601, 602) der Straßenoberfläche (600) auf Grundlage von Informationen über eine Betriebsgeschwindigkeit der Straßenfertigermaschine (100); und
Korrigieren eines Bereichs der Straßenoberfläche (600) auf Grundlage des spezifizierten auszuschließenden Bereichs (R1, R2),
Bereitstellen des korrigierten Bereichs für die Straßenfertigermaschine (100), damit diese Bauarbeit an dem korrigierten Bereich autonom durchführt;
wobei die Straßenfertigermaschine (100) eine Bohle (3), die ein Belagsmaterial, das auf die Straßenoberfläche (600) verteilt wird, gleichmäßig verteilt und in einer Fahrzeugbreitenrichtung ausfahrbar und einfahrbar ist, umfasst,
**dadurch gekennzeichnet, dass** der auszuschließende Bereich (R1, R2) auf Grundlage der Form der Kante (601, 602) der Straßenoberfläche (600), einer Fahrgeschwindigkeit der Straßenfertigermaschine (100), mit der die Straßenfertigermaschine (100) fährt, während sie die Straßenoberfläche (600) mittels einer automatischen Fertigungsfunktion fertigt, wobei die Fahrgeschwindigkeit in den Informationen über die Betriebsgeschwindigkeit der Straßenfertigermaschine (100) enthalten ist, einer Ausfahrgeschwindigkeit und Einfahrgeschwindigkeit der Bohle (3), sowie einer Form der Bohle (3), spezifiziert wird.

## Revendications

1. Un appareil de traitement d'informations (300) comprenant :
une partie de spécification (304) configurée pour spécifier une zone à exclure (R1, R2) d'une chaussée (600) à construire par une machine de revêtement routier (100) en fonction d'une modification de la forme d'un bord (601, 602) de la chaussée (600), sur la base d'informations relatives à une vitesse de fonctionnement de la machine de revêtement routier (100) ; et
une partie de correction (305) configurée pour corriger une zone de la chaussée (600), sur la base de la zone à exclure spécifiée (R1, R2) ;
l'appareil (300) étant en outre configuré pour fournir la zone corrigée à la machine de revêtement routier (100) afin d'effectuer de manière autonome la construction sur la zone corrigée ;
dans lequel la machine de revêtement routier (100) comprend une table de finisseuse (3) qui réparti uniformément un matériau de revêtement réparti sur la chaussée (600) et qui est extensible et rétractable dans une direction de largeur de véhicule,
**caractérisé en ce que** la partie de spécification (304) est configurée pour spécifier la zone à exclure (R1, R2), sur la base de la forme du bord (601, 602) de la chaussée (600), d'une vitesse de déplacement de la machine de revêtement routier (100) à laquelle la machine de revêtement routier (100) se déplace tout en effectuant le revêtement de la chaussée (600) par une fonction de revêtement automatique, la vitesse de déplacement étant incluse dans les informations relatives à la vitesse de fonctionnement de la machine de revêtement routier (100), d'une vitesse d'extension et de rétraction de la table de finisseuse (3), et d'une forme de la table de finisseuse (3).

2. L'appareil de traitement d'informations (300) selon la revendication 1, comprenant en outre :
une partie d'acquisition (303) configurée pour acquérir des données de conception indiquant la zone de la chaussée (600), dans lequel
la partie de correction (305) est configurée pour corriger la zone de la chaussée (600) indiquée dans les données de conception, sur la base de la zone à exclure spécifiée (R1, R2).

3. L'appareil de traitement d'informations (300) selon la revendication 2, dans lequel
la partie d'acquisition (303) est configurée pour acquérir un résultat de détection de la forme du bord (601, 602) de la chaussée (600), et
la partie de correction (305) est configurée pour corriger la zone de la chaussée (600) indiquée dans les données de conception, sur la base de la zone à exclure spécifiée (R1, R2) et du résultat de détection.

4. L'appareil de traitement d'informations (300) selon la revendication 1, comprenant en outre :
une partie d'acquisition (303) configurée pour acquérir un résultat de détection de la forme du bord (601, 602) de la chaussée (600), dans lequel
la partie de correction (305) est configurée pour corriger la zone de la chaussée (600), sur la base de la zone à exclure spécifiée (R1, R2) et du résultat de détection.

5. L'appareil de traitement d'informations (300) selon la revendication 1, dans lequel
la partie de correction (305) est configurée pour déterminer une position où commence l'extension ou la rétraction de la table de finisseuse (3) sur la base de la zone à exclure spécifiée (R1, R2).

6. L'appareil de traitement d'informations (300) selon l'une quelconque des revendications 1 à 5, comprenant en outre :
une partie de commande d'affichage (308) configurée pour afficher, sur un dispositif d'affichage (506), des données de conception indiquant la zone corrigée de la chaussée (600).

7. L'appareil de traitement d'informations (300) selon la revendication 6, dans lequel
la partie de commande d'affichage (308) est configurée pour afficher une carte indiquant la zone à exclure spécifiée (R1, R2) au niveau de la zone corrigée de la chaussée (600).

8. L'appareil de traitement d'informations (300) selon la revendication 6, dans lequel
la partie de commande d'affichage (308) affiche des données de conception indiquant la zone corrigée de la chaussée (600) sur le dispositif d'affichage (506) d'un terminal d'information portable (200).

9. L'appareil de traitement d'informations (300) selon l'une quelconque des revendications 1 à 5, comprenant en outre :
une partie de commande de stockage (306) configurée pour stocker, dans la mémoire (301), des données de conception indiquant la zone corrigée de la chaussée (600).

10. Un système de revêtement de chaussée (SYS) comprenant une machine de revêtement routier (100) et un appareil de traitement d'informations (300) selon l'une quelconque des revendications 1 à 9, la machine de revêtement routier (100) et l'appareil de traitement d'informations (300) communiquant entre eux via un réseau (NT), dans lequel
la machine de revêtement routier (100) est configurée pour effectuer une construction sur la zone corrigée de la chaussée (600).

11. Une machine de revêtement routier (100), comprenant :
un appareil de traitement d'informations (300) selon l'une quelconque des revendications 1 à 9, dans lequel
la machine de revêtement routier (100) est configurée pour effectuer une construction sur la zone corrigée de la chaussée (600).

12. La machine de revêtement routier (100) selon la revendication 11, ayant une fonction de revêtement automatique de la zone corrigée de la chaussée (600).

13. Un programme pour amener un ordinateur (500) à exécuter :
spécifier une zone à exclure (R1, R2) d'une chaussée (600) à construire par une machine de revêtement routier (100) en fonction d'une modification de la forme d'un bord (601, 602) de la chaussée (600), sur la base d'informations relatives à une vitesse de fonctionnement de la machine de revêtement routier (100) ; et
corriger une zone de la chaussée (600), sur la base de la zone à exclure spécifiée (R1, R2),
fournir la zone corrigée à la machine de revêtement routier (100) afin d'effectuer de manière autonome la construction sur la zone corrigée ;
dans lequel la machine de revêtement routier (100) comprend une table de finisseuse (3) qui répartit uniformément un matériau de revêtement réparti sur la chaussée (600) et qui est extensible et rétractable dans une direction de largeur de véhicule,
**caractérisé en ce que** la zone à exclure (R1, R2) est spécifiée sur la base de la forme du bord (601, 602) de la chaussée (600), d'une vitesse de déplacement de la machine de revêtement routier (100) à laquelle la machine de revêtement routier (100) se déplace tout en effectuant le revêtement de la chaussée (600) par une fonction de revêtement automatique, la vitesse de déplacement étant incluse dans les informations relatives à la vitesse de fonctionnement de la machine de revêtement routier (100), d'une vitesse d'extension et de rétraction de la table de finisseuse (3), et d'une forme de la table de finisseuse (3).
